# EUROPEAN PATENT APPLICATION

(11) **EP 2 955 830 A1**
(43) Date of publication of application: **16.12.2015**
(21) Application number: 14748545.2
(22) Date of filing: 06.02.2014
(51) Int. Cl.: H02M 3/155, H02J 1/00

(54) **DC-DC CONVERTER**

(30) Priority: 08.02.2013 JP 2013022978
(71) Applicant: Murata Manufacturing Co., Ltd., Nagaokakyo-shi, Kyoto 617-8555 (JP)
(72) Inventor: TAGO, Masanari, Nagaokakyo-shi Kyoto 617-8555 (JP); KONISHI, Masanori, Nagaokakyo-shi Kyoto 617-8555 (JP)
(74) Representative: Behr, Wolfgang
(86) International application number: PCT/JP2014/052715
(87) International publication number: WO 2014/123173

(57) **Abstract**

A DC-DC converter (101) includes a smoothing circuit configured to smooth a voltage and a current switched by a switching element (Q1), and a control section (10) configured to control an output voltage and an output current of the smoothing circuit through control of the switching element (Q1). The smoothing circuit includes a first smoothing circuit composed of an inductor (L1) and smoothing capacitors (C2, C3), and a second smoothing circuit composed of an inductor (L1) and a capacitor (C4). The first smoothing circuit smoothes the voltage and the current switched by the switching element (Q1) and supplies the voltage and the current to a load (RL). The second smoothing circuit smoothes the voltage and the current switched by the switching element (Q1) and supplies the voltage and the current to a voltage dividing circuit (R1, R2). The control section (10) performs feedback control of the switching element (Q1) such that the voltage supplied to the voltage dividing circuit is constant. By so doing, a DC-DC converter is provided which allows output voltage characteristics to have a gradient without occurrence of loss.

## Description

### Technical Field

The present invention relates to a DC-DC converter having current-voltage characteristics with a predetermined gradient.

### Background Art

There is a power supply apparatus configured such that a plurality of power supplies are connected in parallel in order to increase output. In the case where a plurality of power supplies are used, various methods have been proposed which are intended to distribute loads on the respective power supplies to make burdens on the power supplies uniform. For example, Patent Document 1 discloses a parallel drive power supply apparatus configured such that a plurality of voltage supplies are connected in parallel.

The parallel drive power supply apparatus described in Patent Document 1 includes two DC-DC converters. In Patent Document 1, a resistor is inserted at the output side of each DC-DC converter to allow current-voltage characteristics (characteristics indicating voltage change with respect to current change) of each DC-DC converter to have a gradient, such that the gradients are the same. In this configuration, when an output current to a load connected to the parallel drive power supply apparatus is low, only the DC-DC converter that has a higher output voltage outputs a current, and when the output current to the load increases, both DC-DC converters output currents. In this manner, a load on each of the two DC-DC converters is distributed.

### Citation List

### Patent Document

Patent Document 1: Japanese Unexamined Patent Application Publication No. 2005-168090

### Summary of Invention

### Technical Problem

However, Patent Document 1 has a problem in that since the resistors are connected to load current paths of the DC-DC converters, loss by the resistors occurs, and conversion efficiency decreases.

Accordingly, an object of the present invention is to provide a DC-DC converter which is allowed to cause current-voltage characteristics to have a gradient without occurrence of loss.

### Solution to Problem

The present invention provides a DC-DC converter including a switching circuit configured to switch a voltage and a current inputted to a DC power supply input section, a smoothing circuit configured to smooth the voltage and the current switched by the switching circuit, and a switching control circuit configured to control an output voltage and an output current of the smoothing circuit through control of the switching circuit. The smoothing circuit includes: a first smoothing circuit configured to smooth the voltage and the current switched by the switching circuit and supply the voltage and the current to a main load; and a second smoothing circuit configured to smooth the voltage and the current switched by the switching circuit and supply the voltage and the current to a sub load, and the switching control circuit performs feedback control of the switching circuit in accordance with a comparison between the voltage supplied to the sub load and a reference voltage.

The present invention provides a DC-DC converter including a switching circuit configured to switch a voltage and a current inputted to a DC power supply input section, a smoothing circuit configured to smooth the voltage and the current switched by the switching circuit, and a switching control circuit configured to control an output voltage and an output current of the smoothing circuit through control of the switching circuit. The switching circuit includes a first switching circuit and a second switching circuit each configured to switch the voltage and the current inputted to the DC power supply input section, the smoothing circuit includes: a first smoothing circuit configured to smooth the voltage and the current switched by the first switching circuit and supply the voltage and the current to a main load; and a second smoothing circuit configured to smooth the voltage and the current switched by the second switching circuit and supply the voltage and the current to a sub load, and the switching control circuit performs feedback control of the first switching circuit and the second switching circuit in accordance with a comparison between the voltage supplied to the sub load and a reference voltage.

The present invention provides a DC-DC converter including a switching circuit configured to switch a voltage and a current inputted to a DC power supply input section, a smoothing circuit configured to smooth the voltage and the current switched by the switching circuit, and a switching control circuit configured to control an output voltage and an output current of the smoothing circuit through control of the switching circuit. The switching circuit includes a third switching circuit and a fourth switching circuit each configured to switch the voltage and the current inputted to the DC power supply input section, the smoothing circuit includes: a third smoothing circuit configured to smooth the voltage and the current switched by the third switching circuit and supply the voltage and the current to a main load and a sub load; and a fourth smoothing circuit configured to smooth the voltage and the current switched by the fourth switching circuit and supply the voltage and the current to the main load and the sub load, and the switching control circuit performs feedback control of the third switching circuit and the fourth switching circuit in accordance with a comparison between the voltage supplied to the sub load and a reference voltage.

In these configurations, switching of the switching circuit is controlled on the basis of the output voltage to the sub load, not the output voltage to the main load. By so doing, switching control is performed such that the output voltage from the switching circuit is constant regardless of the output current to the main load (in a state where the load is constant). In the case where the output voltage from the switching circuit is constant, due to influence of an internal resistance and a wiring resistance (hereinafter, referred to as total resistance) of the element and the like, the output voltage to the main load decreases from the output voltage from the switching circuit by "total resistance x current to the main load". Therefore, with increase in the output current to the main load, the output voltage decreases. As a result, it is possible to cause the current-voltage characteristics to have a gradient without using a resistor for voltage drop, that is, without occurrence of loss by the resistor.

The sub load may be configured to include a resistance voltage dividing circuit having temperature dependence of an output voltage with respect to an applied voltage.

In this configuration, it is possible to shift a voltage gradient depending on temperature, and it is possible to prevent concentration of current (concentration of heat generation) on a specific DC-DC converter during parallel operation. As a result, it is possible to achieve balanced parallel operation.

### Advantageous Effects of Invention

According to the present invention, it is possible to cause the current-voltage characteristics to have a gradient without using a resistor for voltage drop.

### Brief Description of Drawings

[Fig. 1] Fig. 1 is a circuit diagram of a step-up DC-DC converter according to Embodiment 1.
[Fig. 2] Fig. 2 is a diagram showing current-voltage characteristics.
[Fig. 3] Fig. 3 is a diagram showing current-voltage characteristics of two DC-DC converters which are driven in parallel.
[Fig. 4] Fig. 4 is a circuit diagram of a step-down DC-DC converter according to Embodiment 2.
[Fig. 5] Fig. 5 is a circuit diagram of a DC-DC converter according to Embodiment 3.
[Fig. 6] Fig. 6 is a circuit diagram of a DC-DC converter according to Embodiment 4.
[Fig. 7] Fig. 7 is a circuit diagram of a DC-DC converter according to Embodiment 5.
[Fig. 8] Fig. 8 is a circuit diagram of a DC-DC converter according to Embodiment 6.
[Fig. 9] Fig. 9 is a diagram showing current-voltage characteristics with temperature change.
[Fig. 10] Fig. 10 is a circuit diagram of a DC-DC converter according to Embodiment 7.

### Description of Embodiments

### (Embodiment 1)

In Embodiment 1, an example will be described in which a DC-DC converter according to the present invention is a step-up DC-DC converter which steps up an inputted DC voltage, and droop characteristics of the DC-DC converter are generated.

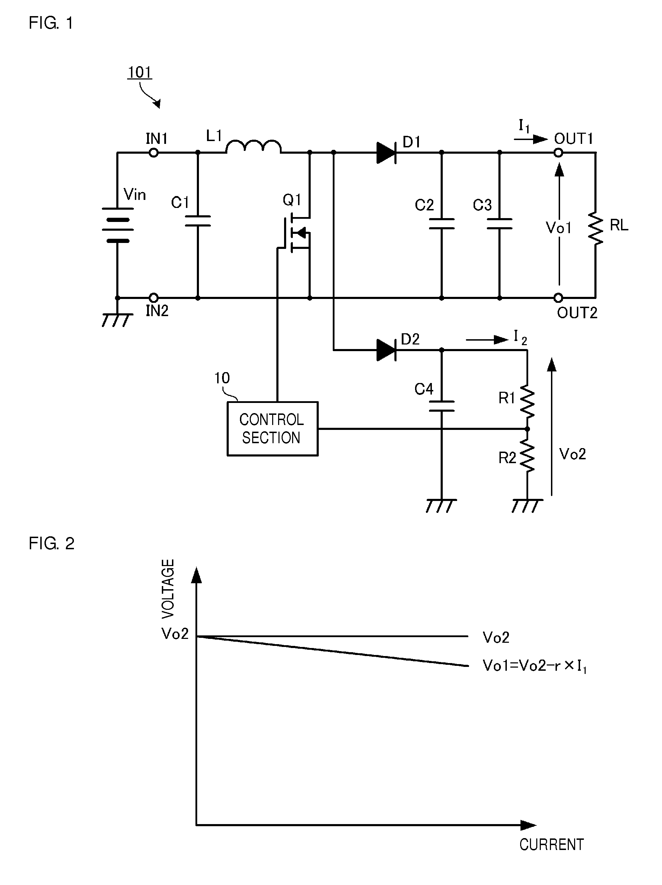

Fig. 1 is a circuit diagram of the step-up DC-DC converter according to Embodiment 1. The DC-DC converter 101 according to Embodiment 1 includes input terminals IN1 and IN2 to which a DC power supply Vin is connected, and output terminals OUT1 and OUT2 to which a load (a main load of the present invention) RL is connected. The DC-DC converter 101 steps up a DC voltage inputted through the input terminals IN1 and IN2, and outputs the stepped-up DC voltage through the output terminals OUT1 and OUT2 to the load RL.

Hereinafter, an output current through the output terminals OUT1 and OUT2 is denoted by I₁, and the output voltage through the output terminals OUT1 and OUT2 is denoted by Vo1.

An input capacitor C1 is connected to the input terminals IN1 and IN2. An inductor L1 and a switching element Q1 which are connected in series are connected to the input terminals IN1 and IN2. The switching element Q1 is an n-type MOS-FET, its drain is connected to the inductor L1, and its source is connected to the input terminal IN2. In addition, the gate of the switching element Q1 is connected to a later-described control section (a switching control circuit of the present invention) 10, and the switching element Q1 is turned ON/OFF when a control signal is inputted thereto from the control section 10.

The above-described inductor L1 and a diode D1 connected in series with the inductor L1 are connected between the input terminal IN1 and the output terminal OUT1. The anode of the diode D1 is connected to the inductor L1, and the cathode of the diode D1 is connected to the output terminal OUT1. Smoothing capacitors C2 and C3 are connected to the cathode of the diode D1.

In this configuration, when the switching element Q1 is turned ON/OFF, the DC voltage inputted through the input terminals IN1 and IN2 is stepped up, and the stepped-up DC voltage is outputted through the output terminals OUT1 and OUT2 to the load RL.

It should be noted that the above-described switching element Q1 corresponds to a switching circuit of the present invention, and the inductor L1 and the smoothing capacitors C2 and C3 correspond to a first smoothing circuit of the present invention.

A diode D2 and a smoothing capacitor C4 are provided at a connection point between the inductor L1 and the switching element Q1. The anode of the diode D2 is connected to the inductor L1, and the cathode of the diode D2 is connected to the smoothing capacitor C4. It should be noted that a smoothing circuit composed of the inductor L1 and the smoothing capacitor C4 described above corresponds to a second smoothing circuit of the present invention.

For example, a voltage dividing circuit composed of 10-kΩ resistors (a sub load of the present invention) R1 and R2 is provided at the cathode of the diode D2. The control section 10 detects an output voltage of the second smoothing circuit with the voltage dividing circuit. Hereinafter, the output voltage is denoted by Vo2, and an output current is denoted by I₂.

The control section 10 outputs a control signal to the gate of the switching element Q1 to control switching of the switching element Q1 to step up an inputted DC voltage. In addition, the control section 10 detects the output voltage Vo2, and performs feedback control of the switching element Q1 such that the output voltage Vo2 is constant (a reference voltage). By so doing, current-voltage characteristics of the DC-DC converter 101 have a gradient. Specifically, with increase in the output current I₁, the output voltage Vo1 decreases.

Fig. 2 is a diagram showing current-voltage characteristics, and shows characteristics of the output voltages Vo1 and Vo2 with respect to the output currents I₁ and I₂. As shown in Fig. 2, the control section 10 performs PWM control of the switching element Q1 such that the output voltage Vo2 is constant regardless of the magnitude of the output current I₂. It should be noted that the output current I₂ is determined on the basis of the resistors R1 and R2, and thus is constant regardless of the load RL and substantially does not vary. At the connection point between the inductor L1 and the switching element Q1, a line to which the diode D1 is connected and a line to which the diode D2 is connected are connected in parallel. When the load RL is unloaded, the voltage on the line to which the diode D1 is connected is the output voltage Vo2. It should be noted that the output current I₂ is lower than the output current I₁ (I₂ << I₁), and thus it is possible to neglect a voltage drop on the line to which the diode D2 is connected.

An internal resistance of the diode D1, a wiring resistance, and the like (the total resistance of these resistances is denoted by r) are present on the line to which the diode D1 is connected. Thus, a voltage drop of "r x output current I₁" occurs between the inductor L1 and the output terminal OUT1. As a result, it is achieved that the output voltage Vo1 = Vo2 - r x output current I₁. Therefore, the output voltage Vo1 has characteristics inclined from the voltage Vo2 as shown in Fig. 2. It should be noted that the gradient of the output voltage Vo1 is determined on the basis of the resistance r.

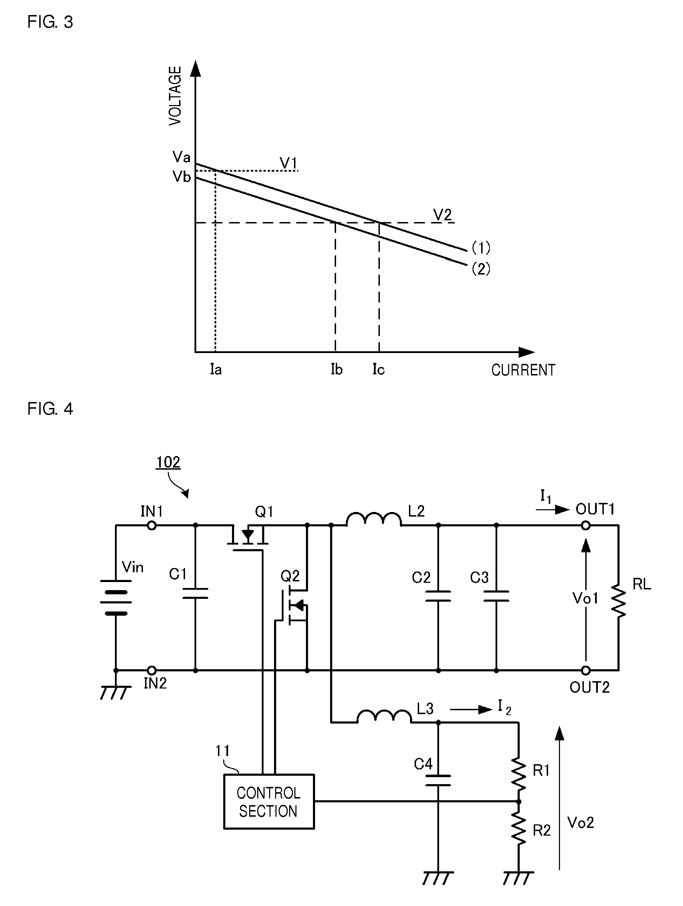

By causing the current-voltage characteristics to have a gradient, for example, in the case where two DC-DC converters are driven in parallel, it is possible to distribute a load on each of the two respective DC-DC converters. Fig. 3 is a diagram showing current-voltage characteristics of two DC-DC converters which are driven in parallel. As shown in Fig. 3, the current-voltage characteristics of the two DC-DC converters are caused to have a gradient. The first DC-DC converter has current-voltage characteristics in which an output voltage Va at no load is a starting point and the output voltage decreases with increase in load, as shown as characteristics (1) in Fig. 3. The second DC-DC converter has current-voltage characteristics in which an output voltage Vb (< Va) at no load is a starting point and the output voltage decreases with increase in load, as shown as characteristics (2) in Fig. 3.

In the case where the two DC-DC converters are driven in parallel, when the output current to the load is low (at an output current Ia), only the first DC-DC converter outputs a voltage V1. That is, a load is applied to only the first DC-DC converter. When the load on the output current increases (at an output current Ib), each of the first DC-DC converter and the second DC-DC converter outputs a voltage V2. At that time, the first DC-DC converter outputs an output current Ic, and the second DC-DC converter outputs the output current Ib. That is, a load is applied to each of the first and second DC-DC converters, and an output current Ib + Ic is outputted.

As described above, since the current-voltage characteristics of the DC-DC converter 101 shown in Fig. 1 have the gradient as shown in Fig. 2, when the output current I₁ to the load RL increases, the output voltage Vo1 decreases, and a burden on the DC-DC converter 101 is reduced. In the present embodiment, since feedback control is performed such that the output voltage Vo2 detected with the voltage dividing circuit is constant, a resistor for voltage drop is not used on a current path to the load RL. Thus, it is possible to cause the current-voltage characteristics to have a gradient without occurrence of loss. Here, by the output voltage Vo2 outputted from the second smoothing circuit (L1, C4), power may be supplied to a low load such a control IC. Even in such a case, variation of the load such as the control IC is small, it is possible to neglect the variation, and thus the output current I₂ to the sub load can be substantially constant.

### (Embodiment 2)

In Embodiment 2, an example will be described in which the DC-DC converter according to the present invention is a step-down DC-DC converter which steps down an inputted DC voltage, and current-voltage characteristics are caused to have a gradient. Hereinafter, the same components as those in Embodiment 1 are designated by the same reference sings, and the description thereof is omitted.

Fig. 4 is a circuit diagram of the step-down DC-DC converter according to Embodiment 2. The DC-DC converter 102 according to Embodiment 2 steps down a DC voltage inputted through input terminals IN1 and IN2, and outputs the stepped-down DC voltage through output terminals OUT1 and OUT2 to a load RL.

A switching element Q1 and an inductor L2 which are connected in series are connected between the input terminal IN1 and the output terminal OUT1. The switching element Q1 is an n-type MOS-FET, its drain is connected to the input terminal IN1, and its source is connected to the inductor L2.

A switching element Q2 is connected to the switching element Q1. The switching element Q2 is also an n-type MOS-FET, its drain is connected to the switching element Q1, and its source is connected to the input terminal IN2. In addition, smoothing capacitors C2 and C3 are connected between the inductor L2 and the output terminal OUT1.

The gate of each of the switching elements Q1 and Q2 is connected to a control section 11, and each of the switching elements Q1 and Q2 is turned ON/OFF when a control signal is inputted thereto from the control section 11.

In this configuration, when the switching elements Q1 and Q2 are alternately turned ON/OFF, the DC voltage inputted through the input terminals IN1 and IN2 is stepped down, and the stepped-down DC voltage is outputted through the output terminals OUT1 and OUT2 to the load RL. It should be noted that the switching element Q2 may be a diode.

The switching elements Q1 and Q2 described above correspond to the switching circuit of the present invention, and the inductor L2 and the smoothing capacitors C2 and C3 correspond to the first smoothing circuit of the present invention.

A smoothing circuit (the second smoothing circuit according to the present invention) composed of an inductor L3 and a smoothing capacitor C4 is connected to a connection point between the switching elements Q1 and Q2. Similarly to Embodiment 1, a voltage dividing circuit composed of resistors R1 and R2 is connected to this smoothing circuit.

Similarly to the control section 10 of Embodiment 1, the control section 11 performs feedback control such that an output voltage Vo2 detected with the voltage dividing circuit is constant. Thus, it is possible to cause the current-voltage characteristics of the DC-DC converter 102 to have a gradient without using a resistor for voltage drop on a current path to the load RL and occurrence of loss. In Embodiment 2, an internal resistance of the inductor L2 is present on the current path to the load RL, and thus the gradient of the current-voltage characteristics is greater than that in Embodiment 1.

### (Embodiment 3)

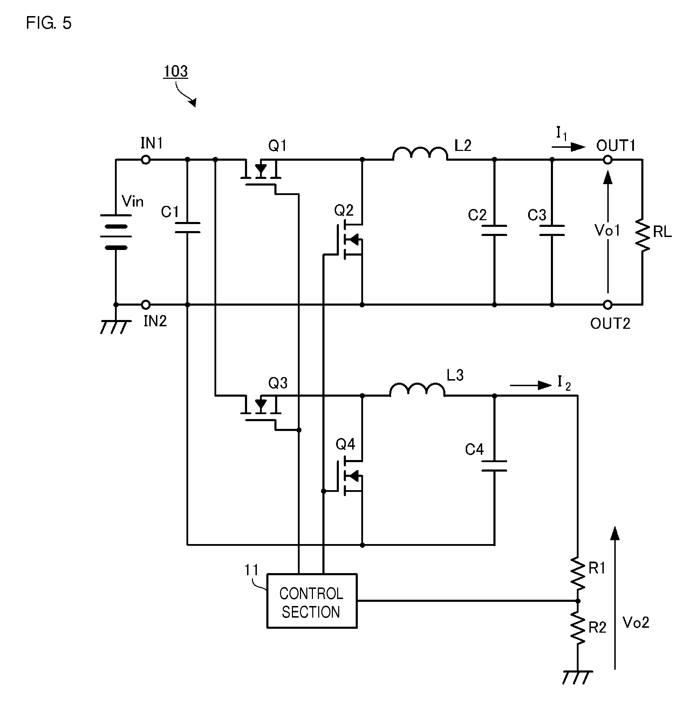

Embodiment 3 is an example where the ON resistance of the switching element Q1 of the DC-DC converter 102 and the internal resistance of the inductor L2 according to Embodiment 2 are used for generating current-voltage characteristics having a gradient. Fig. 5 is a circuit diagram of a DC-DC converter according to Embodiment 3.

A switching element Q3 is connected to an input terminal IN1. The switching element Q3 is an n-type MOS-FET, its drain is connected to the input terminal IN1, and its source is connected to an inductor L3. In addition, a switching element Q4 is connected to the switching element Q3.

It should be noted that in the DC-DC converter 103, the switching elements Q1 and Q2 correspond to a first switching circuit according to the present invention, and the switching elements Q3 and Q4 correspond to a second switching circuit according to the present invention. In addition, the inductor L2 and smoothing capacitors C2 and C3 correspond to the first smoothing circuit according to the present invention, and a smoothing circuit composed of the inductor L3 and a smoothing capacitor C4 corresponds to the second smoothing circuit according to the present invention.

A control section 11 detects an output voltage Vo2 with a voltage dividing circuit composed of resistors R1 and R2, and performs feedback control of the switching elements Q1, Q2, Q3, and Q4 such that the output voltage Vo2 is constant (a reference voltage). Thus, similarly to Embodiment 2, it is possible to cause the current-voltage characteristics to have a gradient. In the circuit of the DC-DC converter 103, the gradient of the current-voltage characteristics is determined on the basis of the ON resistance of the switching element Q1, the internal resistance of the inductor L2, and a wiring resistance. Therefore, the gradient of the voltage-current characteristics in Embodiment 3 is greater than that in Embodiment 2 by the ON resistance of the switching element Q1.

As described above, in Embodiment 3, similarly to Embodiments 1 and 2, it is possible to cause the voltage-current characteristics to have a gradient without using a resistor for voltage drop on a current path for to a load RL. Furthermore, it is possible to achieve voltage-current characteristics having a greater gradient than those in Embodiments 1 and 2, by using the ON resistance of the switching element Q1.

### (Embodiment 4)

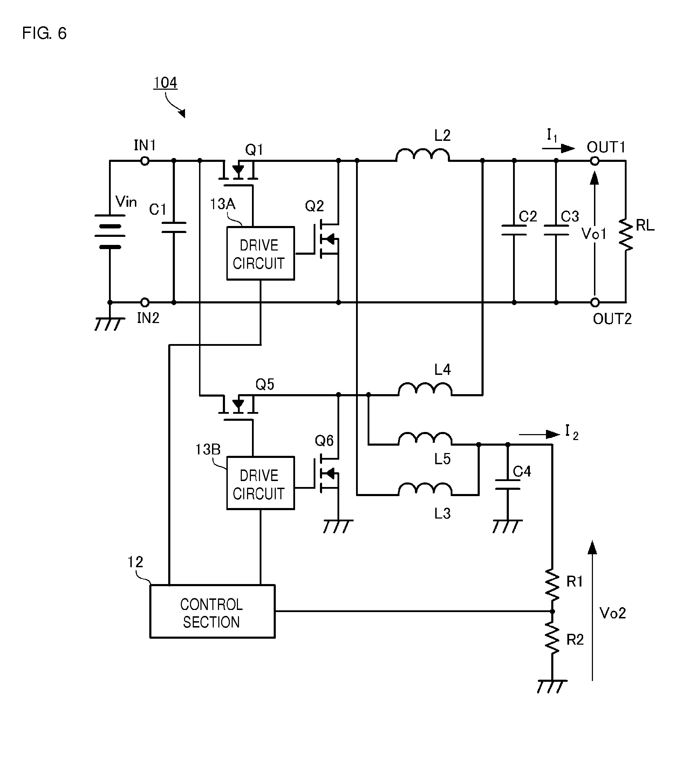

In Embodiment 4, an interleave type DC-DC converter configured such that the two DC-DC converters 102 according to Embodiment 2 are disposed in parallel is shown as an example. Fig. 6 is a circuit diagram of the DC-DC converter according to Embodiment 4.

A switching element Q5 and an inductor L4 are connected to an input terminal IN1. The inductor L4 is connected to an output terminal OUT1. In addition, a smoothing circuit composed of an inductor L5 and the smoothing capacitor C4 is connected to the switching element Q5.

In the DC-DC converter 104, switching elements Q1 and Q2 correspond to the first switching circuit according to the present invention, and the switching elements Q5 and Q6 correspond to the second switching circuit according to the present invention. In addition, inductors L2 and L3 and smoothing capacitors C2, C3, and C4 correspond to a third smoothing circuit according to the present invention, and the inductors L4 and L5 and the smoothing capacitors C2, C3, and C4 correspond to a fourth smoothing circuit according to the present invention.

Switching of the switching elements Q1 and Q2 is controlled by a drive circuit 13A, and switching of the switching elements Q5 and Q6 is controlled by a drive circuit 13B. In addition, driving signals are inputted from a control section 12 to the drive circuits 13A and 13B. The drive circuit 13A and the drive circuit 13B control switching of the switching element Q1 and the switching element Q5 with a phase difference of 180 degrees therebetween, and control switching of the switching element Q2 and the switching element Q6 with a phase difference of 180 degrees therebetween.

The control section 12 performs feedback control such that an output voltage Vo2 detected with a voltage dividing circuit is constant. Thus, it is possible to cause the current-voltage characteristics to have a gradient without using a resistor for voltage drop on a current path to a load RL. In addition, because of the interleave type, it is possible to reduce ripple of an output current I₁.

### (Embodiment 5)

Embodiment 5 is an example where a protection circuit for the case where wire breaking occurs in a circuit for controlling an output voltage Vo2, such as breakage of the inductor L3 or the resistor R4 in the DC-DC converter 102 of Embodiment 2, is provided.

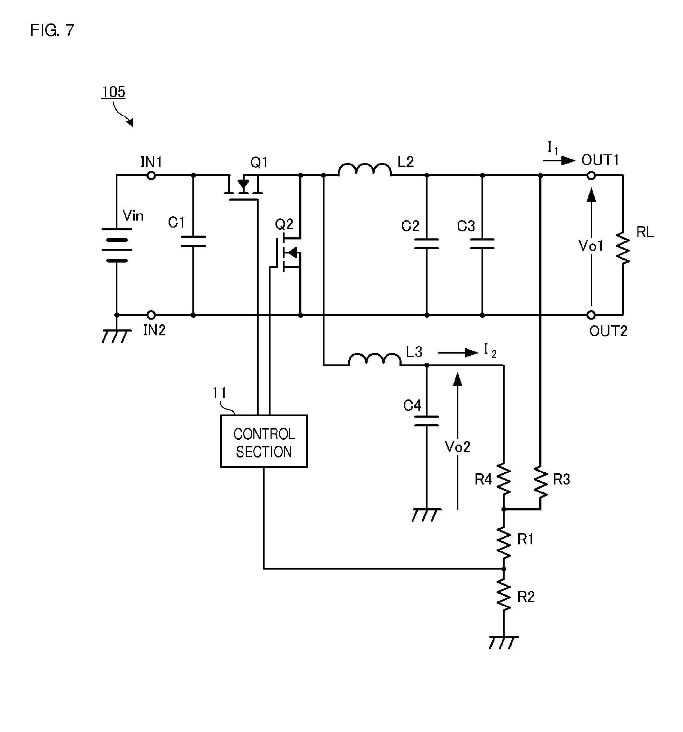

Fig. 7 is a circuit diagram of a DC-DC converter according to Embodiment 5. In the DC-DC converter 105 shown in Fig. 7, a resistor R4 is connected between the inductor L3 and resistors R1 and R2. In addition, a connection point between the resistors R4 and R1 is connected to an output terminal OUT1 via a resistor R3. As each resistance value, for example, the resistors R1 and R2 = 10 kΩ, the resistor R3 = 1 kΩ, and the resistor R4 = 10 Ω.

In this circuit configuration, at normal time, a current flowing upon tuning ON a switching element Q1 flows via the inductor L3 through the resistors R4, R1, and R2. Then, a control section 10 detects the output voltage Vo2 with a voltage dividing circuit (resistors R4, R1, and R2). On the other hand, when wire breaking occurs due to breakage of the inductor L3, the current flowing upon tuning ON the switching element Q1 does not flow through a line passing through the inductor L3. In this case, a current flowing through an inductor L2 flows via the resistor R3 through the resistors R1 and R2. Thus, the control section 10 detects an output voltage Vo1 with a voltage dividing circuit (resistors R3, R1, and R2).

As described above, in the DC-DC converter 105 according to Embodiment 5, even if abnormality such as wire breaking occurs, it is possible prevent abnormality of outputting an overvoltage.

### (Embodiment 6)

In Embodiment 6, an example is shown in which the voltage dividing circuit of the DC-DC converter according to Embodiment 2 is a resistance voltage dividing circuit having temperature dependence.

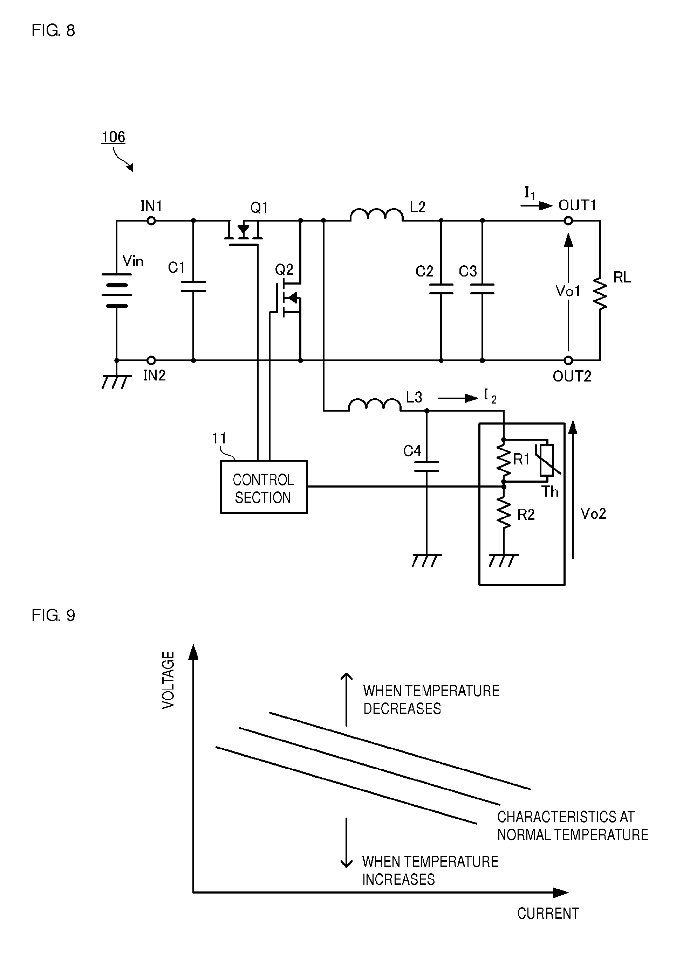

Fig. 8 is a circuit diagram of a DC-DC converter according to Embodiment 6. In addition to the circuit configuration of the DC-DC converter 102 described in Embodiment 2, the DC-DC converter 106 is configured to include a thermistor Th connected in parallel with the resistor R1. The resistance value of the thermistor Th is determined in accordance with the temperatures of the switching elements Q1 and Q2, the inductor L2, and the like. The resistance value varies depending on temperature. As a result, the output voltage Vo2 detected by the control section 10 also varies. Since the output voltage Vo2 varies depending on temperature, it is possible to achieve load distribution of the DC-DC converter 106.

Fig. 9 is a diagram showing current-voltage characteristics with temperature change. For example, in the case where two DC-DC converters are driven in parallel, when a load on the first DC-DC converter is high and the amount of heat generated by the first DC-DC converter is larger than that by the second DC-DC converter, the current-voltage characteristics of the first DC-DC converter shift to the side lower than characteristics at normal temperature as shown in Fig. 9. As a result, the output current of the first DC-DC converter decreases, and the temperature drops.

In addition, since the output current of the first DC-DC converter decreases, a load on the second DC-DC converter is distributed, and the output current from the second DC-DC converter increases. As a result, the amount of heat generated by the second DC-DC converter increases. Thus, the amounts of heat generated by the two DC-DC converters are balanced.

On the other hand, when the load on the first DC-DC converter is low and the amount of heat generated by the first DC-DC converter is smaller than that by the second DC-DC converter, the current-voltage characteristics of the first DC-DC converter shift to the side higher than the characteristics at normal temperature as shown in Fig. 9. As a result, the output current of the first DC-DC converter increases, and the temperature rises. Since the output current of the first DC-DC converter increases, that is, the load on the first DC-DC converter increases, the load on the second DC-DC converter decreases. As a result, the output current from the second DC-DC converter decreases, and the temperature of the second DC-DC converter drops. Thus, the amounts of heat generated by the two DC-DC converters are balanced.

As described above, by causing the current-voltage characteristics to shift depending on temperature, it is possible to prevent concentration of heat on one DC-DC converter during parallel driving.

### (Embodiment 7)

Embodiment 7 is an example where a circuit is provided which controls transient response which occurs in the DC-DC converter 102 according to Embodiment 2.

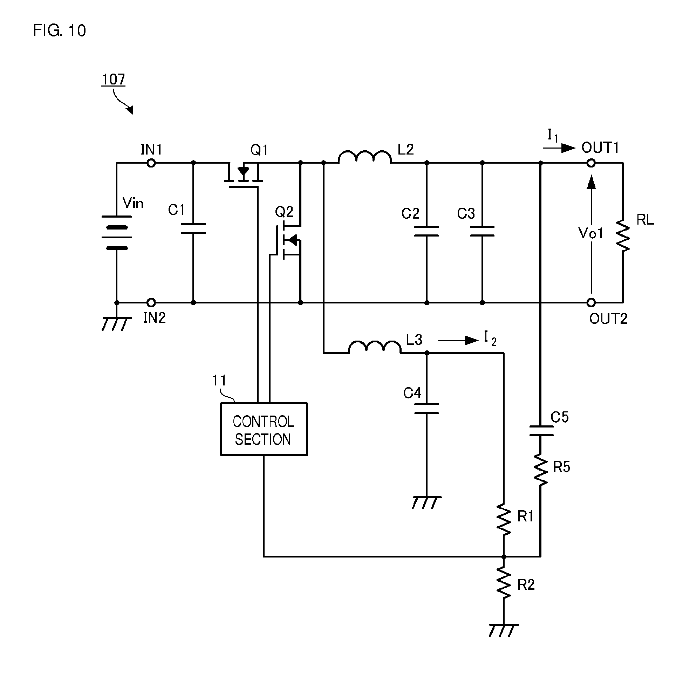

Fig. 10 is a circuit diagram of a DC-DC converter according to Embodiment 7. In addition to the configuration of the DC-DC converter 102 according to Embodiment 2, the DC-DC converter 107 shown in Fig. 10 includes a CR series circuit composed of a resistor R5 and a capacitor C5. The CR series circuit is connected between the output terminal OUT1 and a connection point between the resistors R1 and R2.

In the case of transient response, the control section 10 of the DC-DC converter 107 detects an output voltage from the CR series circuit and performs feedback control. By so doing, it is possible to increase the responsivity when the output current I₁ rapidly increases or decreases.

It should be noted that in Embodiment 7, the example in the case where the CR series circuit for controlling transient response is applied to the step-down DC-DC converter is shown, but the CR series circuit is also similarly applicable to a step-up DC-DC converter.

### Reference Signs List

10, 11, 12 control section
13A, 13B drive circuit
101, 102, 103, 104, 105, 106 DC-DC converter
C1 input capacitor
C2, C3, C4 smoothing capacitor
D1, D2 diode
L1, L2, L3, L4, L5 inductor
Q1, Q2, Q3, Q4, Q5, Q6 switching element
RL load
R1, R2 voltage dividing resistor
R3, R4 resistor
Vi DC power supply
IN1, IN2 input terminal (DC power supply input section)
OUT1, OUT2 output terminal

## Claims

1. A DC-DC converter comprising a switching circuit configured to switch a voltage and a current inputted to a DC power supply input section, a smoothing circuit configured to smooth the voltage and the current switched by the switching circuit, and a switching control circuit configured to control an output voltage and an output current of the smoothing circuit through control of the switching circuit, wherein
the smoothing circuit includes:
a first smoothing circuit configured to smooth the voltage and the current switched by the switching circuit and supply the voltage and the current to a main load; and
a second smoothing circuit configured to smooth the voltage and the current switched by the switching circuit and supply the voltage and the current to a sub load, and
the switching control circuit performs feedback control of the switching circuit in accordance with a comparison between the voltage supplied to the sub load and a reference voltage.

2. A DC-DC converter comprising a switching circuit configured to switch a voltage and a current inputted to a DC power supply input section, a smoothing circuit configured to smooth the voltage and the current switched by the switching circuit, and a switching control circuit configured to control an output voltage and an output current of the smoothing circuit through control of the switching circuit, wherein
the switching circuit includes a first switching circuit and a second switching circuit each configured to switch the voltage and the current inputted to the DC power supply input section,
the smoothing circuit includes:
a first smoothing circuit configured to smooth the voltage and the current switched by the first switching circuit and supply the voltage and the current to a main load; and
a second smoothing circuit configured to smooth the voltage and the current switched by the second switching circuit and supply the voltage and the current to a sub load, and
the switching control circuit performs feedback control of the first switching circuit and the second switching circuit in accordance with a comparison between the voltage supplied to the sub load and a reference voltage.

3. A DC-DC converter comprising a switching circuit configured to switch a voltage and a current inputted to a DC power supply input section, a smoothing circuit configured to smooth the voltage and the current switched by the switching circuit, and a switching control circuit configured to control an output voltage and an output current of the smoothing circuit through control of the switching circuit, wherein
the switching circuit includes a first switching circuit and a second switching circuit each configured to switch the voltage and the current inputted to the DC power supply input section,
the smoothing circuit includes:
a third smoothing circuit configured to smooth the voltage and the current switched by the first switching circuit and supply the voltage and the current to a main load and a sub load; and
a fourth smoothing circuit configured to smooth the voltage and the current switched by the second switching circuit and supply the voltage and the current to the main load and the sub load, and
the switching control circuit performs feedback control of the first switching circuit and the second switching circuit in accordance with a comparison between the voltage supplied to the sub load and a reference voltage.

4. The DC-DC converter according to any one of Claims 1 to 3, wherein the sub load includes a resistance voltage dividing circuit having temperature dependence of an output voltage with respect to an applied voltage.
